# EUROPÄISCHE PATENTANMELDUNG

(11) **EP 1 445 141 A1**
(43) Veröffentlichungstag der Anmeldung: **11.08.2004**
(21) Anmeldenummer: 03027243.9
(22) Anmeldetag: 28.11.2003
(51) Int. Cl.: B60K 17/346

(54) **Antriebsvorrichtung**

(30) Priorität: 06.02.2003 DE 10304806
(71) Anmelder: AUDI AG, 85045 Ingolstadt (DE)
(72) Erfinder: Meixner, Christian, 85049 Ingolstadt (DE)
(74) Vertreter: Asch, Konrad

(57) **Zusammenfassung**

Die Erfindung betrifft eine Antriebsvorrichtung für allradgetriebene Kraftfahrzeuge, mit einem Geschwindigkeits-Wechselgetriebe und einem Zwischenachsdifferenzial zur Abtriebsmomentenverteilung auf ein erstes und ein zweites Achsdifferenzial, über die die Vorderräder und die Hinterräder des Kraftfahrzeuges angetrieben werden, wobei eine Antriebswelle des Wechselgetriebes ein Antriebselement des Zwischenachsdifferenziales antreibt und Abtriebselemente des Zwischenachsdifferenziales mit den Achsdifferenzialen trieblich verbunden sind und wobei eine die Abtriebsmomentenverteilung beeinflussende Kupplung vorgesehen ist. Eine stufenlos variable Abtriebsmomentenverteilung weist die folgenden Merkmale auf: - die Auslegung des Zwischenachsdifferenziales ist so, dass unterschiedliche Abtriebsmomente zu den Achsdifferenzialen vorliegen; - die beiden Abtriebselemente des Zwischenachsdifferenziales sind mittels einer schlupfgesteuerten Lamellenkupplung miteinander koppelbar; - wobei das eine Abtriebselement über zwei Übersetzungsstufen an zumindest einer separaten Vorgelegewelle mit einem Element der Lamellenkupplung trieblich verbunden ist; und - die Übersetzungsstufen weisen unterschiedliche Übersetzungsverhältnisse auf.

## Beschreibung

Die Erfindung betrifft eine Antriebsvorrichtung für allradgetriebene Kraftfahrzeuge, gemäß dem Oberbegriff des Patentanspruches 1.

Allradantriebe sind in einer Vielzahl von Ausführungen bekannt, beispielsweise als permanenter Allradantrieb, als zuschaltbarer Allradantrieb, z. B. über eine Viskokupplung (Scherreibungskupplung), oder mit Antriebsmomentenverteilung mittels einer oder mehrerer elektrohydraulisch steuerbarer Lamellenkupplungen. Sofern bei solchen Allradantrieben eine Antriebsmomentenverteilung erfolgen soll, sind sie jedoch relativ kompliziert und steuerungstechnisch aufwändig ausgeführt. Ferner sind sie nicht bei vertretbarem Aufwand stufenlos variabel von z. B. hecklastig (Antriebsmoment verstärkt auf der Hinterachse) über neutral auf frontlastig umsteuerbar.

Aufgabe der Erfindung ist es, eine Antriebsvorrichtung der gattungsgemäßen Art vorzuschlagen, die mit relativ geringem baulichen und steuerungstechnischem Aufwand eine stufenlos variable Antriebsmomentenverteilung auf die vorderen und hinteren Räder des Kraftfahrzeuges ermöglicht.

Diese Aufgabe wird erfindungsgemäß mit den kennzeichnenden Merkmalen des Patentanspruches 1 gelöst. Vorteilhafte Weiterbildungen des erfindungsgemäßen Verfahrens beschreiben die weiteren Patentansprüche.

Die Lösung der gestellten Aufgabe basiert auf den folgenden Merkmalen:
- die Auslegung des Zwischenachsdifferenziales ist so, dass unterschiedliche Abtriebsmomente zu den Achsdifferenzialen vorliegen;
- die beiden Abtriebselemente des Zwischenachsdifferenziales sind mittels einer schlupfgesteuerten Lamellenkupplung miteinander koppelbar;
- wobei das eine Abtriebselement über zwei Übersetzungsstufen an zumindest einer separaten Vorgelegewelle mit einem Element der Lamellenkupplung trieblich verbunden ist; und
- die Übersetzungsstufen weisen unterschiedliche Übersetzungsverhältnisse auf.

Durch die beschriebenen Merkmale kann unter Verwendung nur einer schlupfgesteuerten Kupplung stufenlos variabel das Abtriebsmoment vom Zwischenachsdifferenzial zu den Achsdifferenzialen (= Antriebsmoment der Achsen) ausgehend von der konstruktiv vorgegebenen Grundverteilung (z. B. 70:30) in Neutral (50:50) und in eine umgekehrte Lastigkeit (z. B. 30:70 oder mehr) umgesteuert werden. Dabei ist es wesentlich, dass neben der konstruktiv vorgegebenen Momentenverteilung des Zwischenachsdifferenziales durch die unterschiedlichen Übersetzungsverhältnisse der Übersetzungsstufen die Kupplungselemente zueinander unterschiedliche Drehzahlen aufweisen. Dementsprechend kann durch entsprechende Schlupfsteuerung zunehmend Abtriebsmoment über die Lamellenkupplung auf die angekoppelte Abtriebswelle übertragen werden und somit die Grundverteilung steuerungstechnisch einfach. und schnell in Richtung neutral und umgekehrte Grundverteilung gesteuert werden.

Die schlupfgesteuerte Lamellenkupplung könnte eine Viskokupplung sein, die geschwindigkeitsabhängig die Abtriebsmomentenverteilung beeinflusst. Bevorzugt wird jedoch vorgeschlagen, diese Steuerung abhängig von Betriebsparametern des Kraftfahrzeuges wie beispielsweise Geschwindigkeit, Fahrbahn-Zustand, -Steigungen oder -Gefälle, Schaltzustand des Wechselgetriebes etc. durchzuführen. Die Lamellenkupplung kann dabei in bekannter Weise hydraulisch betätigt und gekühlt sein, wobei entsprechende Steuerventile über ein elektronisches Steuergerät beaufschlagt werden.

Bevorzugt wird ferner vorgeschlagen, dass das höhere Abtriebsmoment auf das die hinteren Räder des Kraftfahrzeuges antreibende Achsdifferenzial geschaltet ist und dass die weitere Übersetzungsstufe dem abtreibenden Element der Lamellenkupplung eine geringere Drehzahl als die der Abtriebswelle aufprägt. Damit ist eine hecklastige Grundverteilung geschaffen, die insbesondere bei sportlich ausgelegten Kraftfahrzeugen fahrdynamische Vorteile bieten kann und die bei Bedarf jederzeit entsprechend variabel auf neutral und frontlastig veränderbar ist.

Das Zwischenachsdifferenzial kann ein unsymmetrisch ausgelegtes Kegelraddifferenzial oder bevorzugt ein hinsichtlich der Abtriebsmomentenverteilung besser beherrschbares und robusteres Planetengetriebe sein.

Eine baulich besonders gedrängte und hinsichtlich der Kombination mit einem herkömmlich allradgetriebenem Kraftfahrzeug eine problemlose Erweiterung zu einem variabel steuerbarem Allradantrieb ergebende Konstruktion ist dadurch gekennzeichnet, dass die Abtriebswelle zu dem vorderen Achsdifferenzial des Kraftfahrzeuges eine Hohlwelle ist, durch die hindurch die Antriebswelle des Wechselgetriebes verläuft und das Antriebselement des Zwischenachsdifferenziales antreibt. Daraus resultiert eine Art Patronenlösung, die ausgehend von einem herkömmlichen Wechselgetriebe des Kraftfahrzeuges mit seitlich angebautem Vorderachs-Differenzial und einem Zwischenachsdifferenzial nur durch steckbaren Austausch des modifizierten Zwischenachsdifferenziales mit integrierter schlupfgesteuerter Lamellenkupplung einen Allradantrieb mit stufenlos variabler Antriebsmomentenverteilung ermöglicht, wobei zudem die beiden Abtriebswellen koaxial angeordnet sein können.

Ferner kann zur Erzielung einer günstigen Abtriebsmomentenverteilung des Zwischenachsdifferenziales das Antriebselement des Planetengetriebes der Planetenradträger sein, während die Abtriebselemente durch das Sonnenrad und das Außenrad gebildet sind.

Die Lamellenkupplung kann auf der hohlen Abtriebswelle des Planetengetriebes des Zwischenachsdifferenziales positioniert sein und dementsprechend hinsichtlich der hydraulischen Beaufschlagung und Steuerung sowie der baulichen Anordnung konstruktive Vorteile und eine robuste Anordnung bieten.

Ferner können baulich besonders vorteilhaft die Übersetzungsstufen Zahnradsätze sein, die beiderseits des Planetengetriebes angeordnet sind, wobei das eine mit dem korrespondierenden Zahnrad an der Vorgelegewelle kämmende Zahnrad am Außenrad und das andere Zahnrad am Gehäuse der Lamellenkupplung vorgesehen ist.

Des weiteren ist bevorzugt das Außenrad des Planetengetriebes mit dem höheren Abtriebsmoment mit dem Achsdifferenzial für den Antrieb der hinteren Räder des Kraftfahrzeuges trieblich verbunden, wodurch eine besonders günstige Abtriebsmomentenverteilung innerhalb des Zwischenachsdifferenziales bei baulich einfacher Gestaltung und Anordnung des betreffenden Planetengetriebes vorliegt.

Alternativ kann das Planetengetriebe ein Doppelplanetengetriebe sein, dessen radial innenliegende Planetenräder mit dem Sonnenrad und dessen außenliegende Planetenräder mit dem Außenrad kämmen, wobei zudem das Außenrad das Antriebselement bildet und das Abtriebselement zum hinteren Achsdifferenzial der Planetenradträger ist. Damit lässt sich bei relativ geringem Mehraufwand eine noch stärker differierende Grundverteilung des Abtriebsmomentes herstellen, die die Gesamtverstellbarkeit des Allradantriebes vorteilhaft zur noch besseren Anpassung an fahrdynamische Erfordernisse des Kraftfahrzeuges erweitert.

Anstelle einer Vorgelegewelle mit entsprechenden Übersetzungsstufen können beispielsweise zur Übertragung höherer Kupplungsmomente und zur Erzielung einer kompakteren Bauweise des Zwischenachsdifferenziales mehrere einander unmittelbar benachbarte und umfangsversetzte Übersetzungsstufen mit jeweils einer Vorgelegewelle um die mit diesen kämmenden Zahnrädern herum vorgesehen sein, vorzugsweise in der Art eines Planetengetriebes als Standgetriebe.

Des weiteren können die mehreren Übersetzungsstufen mit Vorgelegewellen baulich zwischen der Lamellenkupplung und dem Planetengetriebe ähnlich Planetenradanordnungen mit geringem Außenumfang ausgeführt sein und somit eine baulich integrierte Einheit mit dem Planetengetriebe und der Lamellenkupplung bilden.

Bei entsprechenden steuerungstechnischen Maßnahmen z. B. über ein elektronisches Steuergerät und eine elektrohydraulische Steuerung der Lamellenkupplung kann diese abhängig von Betriebsparametern und/oder Fahrdynamikparametern so schlupfgesteuert sein, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

Dabei können bevorzugt die Betriebsparameter mehrere elektronisch abgelegte Fahrprogramme eines automatischen Geschwindigkeits-Wechselgetriebes des Kraftfahrzeuges sein, bei deren Vorwählen unterschiedliche Abtriebsmomentenverteilungen des Zwischenachsdifferenziales durch entsprechende Ansteuerung der Lamellenkupplung vorgegeben sind. So kann beispielsweise bei einem Winterprogramm grundsätzlich mehr Antriebsmoment zu den Vorderrädern des Kraftfahrzeuges und bei einem Sportprogramm mehr Antriebsmoment zu den Hinterrädern gesteuert sein.

Des weiteren können besonders vorteilhaft modifizierte Fahrdynamik-Parameter in einem Steuergerät eines elektronischen Fahrstabilitätsprogrammes des Kraftfahrzeuges abgelegt sein und neben den bekannten Eingriffen wie Bremseneingriff und Antriebsmomentverringerung der Antriebsmaschine durch entsprechende zusätzliche Ansteuerung der Lamellenkupplung die Abtriebsmomentenverteilung des Zwischenachsdifferenziales in Richtung neutral und darüber hinaus verändern.

Ein Ausführungsbeispiel der Erfindung ist im Folgenden mit weiteren Einzelheiten näher beschrieben.

Die anliegende schematische Zeichnung zeigt in:
- **Fig. 1**: ein Blockschaltbild einer Antriebsvorrichtung für ein allradgetriebenes Kraftfahrzeug, mit einem Zwischenachsdifferenzial mit einem einfachen Planetengetriebe und einer schlupfgesteuerten Lamellenkupplung an einer mit dem einen Abtriebselement des Planetengetriebes verbundenen Hohlwelle; und
- **Fig. 2**: ein modifiziertes Zwischenachsdifferenzial gemäß Fig. 1 mit einem Doppelplanetengetriebe.

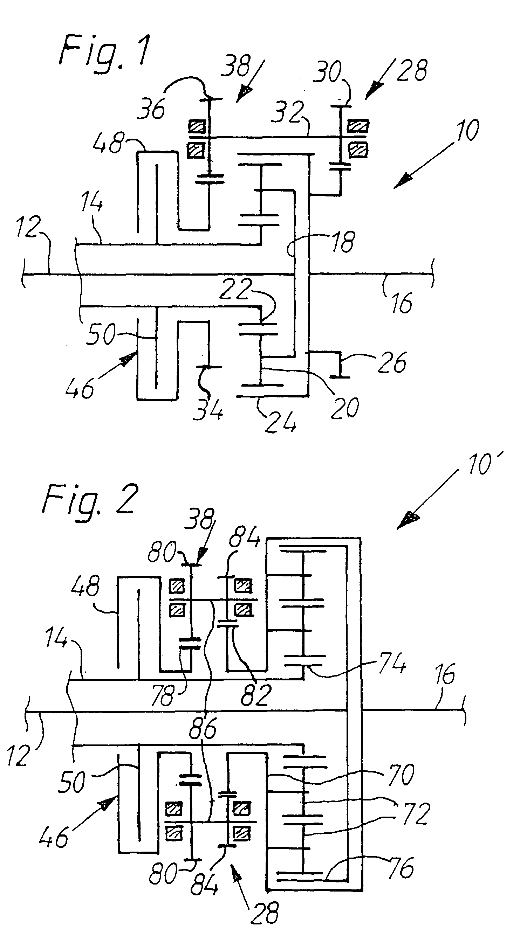

In der **Fig. 1** ist mit 10 ein erstes Zwischenachsdifferenzial als Teil einer Antriebsvorrichtung für einen Allradantrieb an einem Kraftfahrzeug bezeichnet, das in einem entsprechenden Gehäuse (nicht dargestellt) angeordnet und drehbar gelagert ist und das z. B. an ein Geschwindigkeits-Wechselgetriebe eines Kraftfahrzeuges integriert oder angebaut ist.

Das Zwischenachsdifferenzial 10 weist eine Antriebswelle 12 auf, die zugleich die Abtriebswelle des Wechselgetriebes sein kann. Das Wechselgetriebe kann im übrigen ein von einer Brennkraftmaschine angetriebenes Schaltgetriebe, ein automatisches Stufengetriebe oder ein automatisches stufenloses Getriebe sein.

Ferner ist eine erste, als Hohlwelle ausgebildete Abtriebswelle 14 vorgesehen, die mit einem vorderen Achsdifferenzial (nicht dargestellt) zum Antrieb der vorderen Räder des Kraftfahrzeuges trieblich verbunden ist; eine weitere Abtriebswelle 16 treibt beispielsweise über eine Kardanwelle das hintere Achsdifferenzial (ebenfalls nicht dargestellt) des allradgetriebenen Kraftfahrzeuges an.

Das Zwischenachsdifferenzial 10 ist als einfaches Planetengetriebe ausgebildet, mit einem Planetenradträger 18 als Antriebselement, der über die Planetenräder 20 mit dem außenverzahnten Sonnenrad 22 und dem innenverzahnten Außenrad 24 trieblich verbunden ist. Der Planetenradträger 18 ist fest auf der Antriebswelle 12 angeordnet.

Das mit der Abtriebswelle 16 verbundene Außenrad 24 des Planetengetriebes trägt ein Zahnrad 26 einer ersten Übersetzungsstufe 28, deren korrespondierendes Zahnrad 30 auf einer parallel zu den Abtriebswellen 12, 16 in dem nicht dargestelltem Gehäuse des Zwischenachsdifferenziales 10 gelagerten Vorgelegewelle 32 befestigt ist.

An dem anderen Ende der Vorgelegewelle 32 ist mit den Zahnrädern 34, 36 eine weitere Übersetzungsstufe 38 gebildet, wobei das Zahnrad 34 fest mit dem Gehäuse 48 einer auf der Abtriebswelle 14 angeordneten, schlupfgesteuerten Lamellenkupplung 46 verbunden ist. Die Kupplungslamellen 50 (der Einfachheit halber ist nur eine Kupplungslamelle 50 dargestellt) sind drehfest mit der abtreibenden Hohlwelle bzw. Abtriebswelle 14 gekoppelt.

Die Übersetzungsverhältnisse der beiden Übersetzungsstufen 28, 38 sind derart ungleich, dass bei einem angenommenen Gleichlauf der Abtriebswellen 14, 16 und der Antriebswelle 12 das Gehäuse 48 der Lamellenkupplung 46 geringfügig schneller dreht als die Kupplungslamellen 50.

Die Auslegung des Zwischenachsdifferenziales 10 bzw. dessen Planetengetriebes ist ferner so, dass in der konstruktiven Grundverteilung auf die Abtriebswelle 16 zu dem hinteren Achsdifferenzial ein höheres Abtriebsmoment (70%) und auf die Abtriebswelle 14 zum vorderen Achsdifferenzial ein niedrigeres Abtriebsmoment (30%) abgetrieben wird.

Die Lamellenkupplung 46 ist in nicht dargestellter und für sich bekannter Weise elektrohydraulisch (oder elektrisch) schlupfgesteuert betätigt und bewirkt eine stufenlos variable Veränderung der vorgegebenen Abtriebsmomentenverteilung des Zwischenachsdifferenziales 10.

Bei voll geöffneter Lamellenkupplung 46 ist diese ohne Einfluss und das Abtriebsmoment des Zwischenachsdifferenziales 10 ist wie vorgenannt mit Vorrang auf die hinteren Räder des Kraftfahrzeuges. Die Abtriebsübersetzungen im Abtrieb zu den vorderen und hinteren Rädern des Kraftfahrzeuges sind so, dass sich die Abtriebselemente 22, 24 des Planetengetriebes 1:1 drehen, also mit gleicher Drehzahl. Aufgrund der unterschiedlichen Übersetzungsverhältnisse an den beiden Übersetzungsstufen 28, 38 bzw. aufgrund des höheren Übersetzungsverhältnisses der Übersetzungsstufe 38 drehen die mit der Abtriebswelle 14 umlaufenden Kupplungslamellen 50 langsamer als das mit dem Außenrad 24 gekoppelte Kupplungsgehäuse 48.

Soll die Abtriebsmomentenverteilung des Zwischenachsdifferenziales 10 aufgrund definierter, noch zu beschreibender Betriebsparameter des Kraftfahrzeuges von der hecklastigen Grundverteilung von z. B. 70:30 auf neutral (50:50) oder auf frontlastig (z. B. 30:70) stufenlos verändert werden, so wird die Lamellenkupplung 46 zunehmend (aber stets im Schlupfbereich) geschlossen, wodurch aufgrund der vorliegenden Drehzahldifferenz Abtriebsmoment zunehmend von der Abtriebswelle 16 über die Vorgelegewelle 32 auf die Abtriebswelle 14 übertragen wird.

Die Schlupfsteuerung oder Schlupfregelung der Lamellenkupplung 46 erfolgt über ein nicht dargestelltes elektronisches Steuergerät, welches abhängig von Betriebs- und Fahrdynamik-Parametern den Kupplungsschlupf zur variablen Veränderung der Abtriebsmomente des Zwischenachsdifferenziales 10 steuert, wobei das Steuergerät eine entsprechende hydraulische Betätigungseinrichtung mit einer Druckmittelquelle und einem Stellzylinder ansteuert.

Das Steuergerät wertet dabei u.a. sowohl Signale von einem Fahrprogramm-Wählschalter des Wechselgetriebes als auch Signale von einem Steuergerät eines Fahrstabilitätsprogrammes des Kraftfahrzeuges derart aus, dass bei einem Einlegen eines Sportprogrammes des gegebenenfalls automatischen Wechselgetriebes eine größere Hecklastigkeit des Allradantriebs (geringerer Schlupfeingriff der Lamellenkupplung 46) vorliegt als beispielsweise bei einem Winterprogramm mit entsprechend angenommener vorsichtigerer Fahrweise bei mehr neutraler Momentenverteilung.

Neben dem Bremseneingriff und/oder einer Antriebsmomentenreduzierung an der Brennkraftmaschine kann das Fahrstabilitätsprogramm bzw. dessen Steuergerät ebenfalls in die Schlupfsteuerung der Lamellenkupplung 46 eingreifen und bei beginnender Instabilität des Kraftfahrzeuges (erkennbar z. B. über einen Gierwinkelsensor des Fahrstabilitätsprogrammes) die Abtriebsmomentenverteilung des Zwischenachsdifferenziales 10 in Richtung neutral schnell und wirkungsvoll verändern.

Gleiches gilt auch für Fahrbahnbeschaffenheiten, Fahrgeschwindigkeit, Brems- und/oder Beschleunigungszustände, etc. des Kraftfahrzeuges.

Im übrigen sind die Antriebswelle 12 und die Abtriebswelle 14 mit nicht dargestellten Steckverbindungen versehen, die eine einfache Montage an den trieblichen Einrichtungen des Wechselgetriebes ermöglichen, so dass gegebenenfalls problemlos unterschiedliche Zwischenachsdifferenziale 10 montierbar sind (sogenannte Patronenlösung).

Bei dem Zwischenachsdifferenzial 10' gemäß **Fig. 2** ist anstelle des einfachen Planetengetriebes ein Doppelplanetengetriebe wie folgt verwendet. Funktionell gleiche Teile sind mit gleichen Bezugszeichen versehen.

Dabei ist die Abtriebswelle 16 für den Antrieb des hinteren Achsdifferenziales des Kraftfahrzeuges mit dem Planetenradträger 70 als dem einen Abtriebselement des Doppelplanetengetriebes trieblich verbunden, während das andere Abtriebselement durch das Sonnenrad 74 gebildet ist, das mit der hohlen Abtriebswelle 14 zum vorderen Achsdifferenzial verbunden ist. Die Antriebswelle 12 schließlich treibt das Außenrad 76 als Antriebselement des Doppelplanetengetriebes an.

Der Planetenradträger 70 trägt auf entsprechenden Drehzapfen radial zueinander versetzte und miteinander kämmende Planetenräder 72, von denen die radial innenliegenden Planetenräder 72 mit dem Sonnenrad 74 und die radial außenliegenden Planetenräder 72 mit dem antreibenden Außenrad 76 kämmen.

Der Planetenradträger 70 trägt ferner antriebsseitig und auf der hohlen Abtriebswelle 14 gelagert ein Zahnrad 82, das mit mehreren ähnlichen Planetenrädern um das Zahnrad 82 herum angeordneten Zahnrädern 84 der ersten Übersetzungsstufe 28 kämmt.

Benachbart der Übersetzungsstufe 28 ist die zweite Übersetzungsstufe 38 mit einem zentrischen Zahnrad 78 und umfangsversetzten Zahnrädern 80 angeordnet, wobei das Zahnrad 78 wiederum fest mit dem angrenzenden Gehäuse 48 der Lamellenkupplung 46 verbunden ist, deren Kupplungslamellen 50 mit der Antriebswelle 14 gekoppelt sind.

Ferner sind die Zahnräder 80 bzw. 84 über im nicht dargestellten Gehäuse des Zwischenachsdifferenziales 10' drehbar gelagerte Wellenstummel 86 drehfest miteinander verbunden. Die Übersetzungsverhältnisse der Übersetzungsstufen 28, 38 sind wie vorbeschrieben unterschiedlich.

Die beschriebene Konstruktion des Doppelplanetengetriebes ermöglicht eine stärkere Differenz in der Abtriebsmomentenverteilung des Zwischenachsdifferenziales 10' und einen damit beträchtlich erweiterten Verstellbereich des variablen Abtriebsmomentes. Im übrigen ist die Funktion des Zwischenachsdifferenziales 10' im wesentlichen wie vorbeschrieben, indem durch entsprechende Schlupfsteuerung der Lamellenkupplung 46 wiederum Abtriebsmoment von dem Planetenradträger 70 auf die Abtriebswelle 14 verlagert wird.

Die Erfindung ist nicht auf die beschriebenen Ausführungsbeispiele beschränkt. Beispielsweise kann die Schlupfsteuerung der Lamellenkupplung 46 auch als Differenzialsperre eingesetzt sein, jedoch muss ein Restschlupf an der Lamellenkupplung 46 zur Aufrechterhaltung der vorgegebenen Drehzahldifferenz an der Lamellenkupplung 46 stets sichergestellt sein. Auch sind zur Erzielung einer Drehzahldifferenz in der Lamellenkupplung alle Arten von Planetengetrieben in der Anwendung als Standgetriebe denkbar.

## Patentansprüche

1. Antriebsvorrichtung für allradgetriebene Kraftfahrzeuge, mit einem Geschwindigkeits-Wechselgetriebe und einem Zwischenachsdifferenzial zur Abtriebsmomentenverteilung auf ein erstes und ein zweites Achsdifferenzial, über die die Vorderräder und die Hinterräder des Kraftfahrzeuges angetrieben werden, wobei eine Antriebswelle des Wechselgetriebes ein Antriebselement des Zwischenachsdifferenziales antreibt und Abtriebselemente des Zwischenachsdifferenziales mit den Achsdifferenzialen trieblich verbunden sind und wobei eine die Abtriebsmomentenverteilung beeinflussende Kupplung vorgesehen ist, **gekennzeichnet durch folgende Merkmale**:
- die Auslegung des Zwischenachsdifferenziales (10; 10') ist so, dass unterschiedliche Abtriebsmomente zu den Achsdifferenzialen vorliegen;
- die beiden Abtriebselemente (22, 24; 70, 74) des Zwischenachsdifferenziales (10; 10') sind mittels einer schlupfgesteuerten Lamellenkupplung (46) miteinander koppelbar;
- wobei das eine Abtriebselement (24; 70) über zwei Übersetzungsstufen (28, 38) an zumindest einer separaten Vorgelegewelle (32; 86) mit einem Element (48) der Lamellenkupplung (46) trieblich verbunden ist; und
- die Übersetzungsstufen (28, 38) weisen unterschiedliche Übersetzungsverhältnisse auf.

2. Antriebsvorrichtung nach Anspruch 1, **dadurch gekennzeichnet, dass** die Lamellenkupplung (46) abhängig von Betriebsparametern des Kraftfahrzeuges zur variablen Verteilung der Abtriebsmomente des Zwischenachsdifferenziales (10; 10') steuerbar ist.

3. Antriebsvorrichtung nach den Ansprüchen 1 und 2, **dadurch gekennzeichnet, dass** das höhere Abtriebsmoment auf das die hinteren Räder des Kraftfahrzeuges antreibende Achsdifferenzial geschaltet ist und dass die Übersetzungsstufen (28, 38) dem antreibenden Element (48) der Lamellenkupplung (46) eine höhere Drehzahl als die der korrespondierenden Abtriebswelle (14) aufprägt.

4. Antriebsvorrichtung nach den Ansprüchen 1 bis 3, **dadurch gekennzeichnet, dass** das Zwischenachsdifferenzial (46) ein Planetengetriebe ist.

5. Antriebsvorrichtung nach einem oder mehreren der vorhergehenden Ansprüche, **dadurch gekennzeichnet, dass** die Abtriebswelle (14) zu dem vorderen Achsdifferenzial des Kraftfahrzeuges eine Hohlwelle ist, durch die hindurch die Antriebswelle (12) des Wechselgetriebes verläuft und das Antriebselement (18; 76) des Zwischenachsdifferenziales (10; 10') antreibt.

6. Antriebsvorrichtung nach einem oder mehreren der Ansprüche 1 bis 5, **dadurch gekennzeichnet, dass** das Antriebselement des Planetengetriebes der Planetenradträger (18) ist und dass die Abtriebselemente durch das Sonnenrad (22) und das Außenrad (24) gebildet sind.

7. Antriebsvorrichtung nach einem oder mehreren der vorhergehenden Ansprüche, **dadurch gekennzeichnet, dass** die Lamellenkupplung (46) auf der hohlen Abtriebswelle (14) des Planetengetriebes des Zwischenachsdifferenziales (10; 10') positioniert ist.

8. Antriebsvorrichtung nach einem oder mehreren der Ansprüche 1 bis 7, **dadurch gekennzeichnet, dass** die Übersetzungsstufen (28, 38) Zahnradsätze sind, die beiderseits des Planetengetriebes (10) angeordnet sind, wobei das eine mit dem korrespondierenden Zahnrad (30) an der Vorgelegewelle (32) kämmende Zahnrad (26) am Außenrad (24) und das andere Zahnrad (34) am Gehäuse (48) der Lamellenkupplung (46) vorgesehen ist.

9. Antriebsvorrichtung nach einem oder mehreren der Ansprüche 1 bis 8, **dadurch gekennzeichnet, dass** das Außenrad (24) des Planetengetriebes (10) mit dem höheren Abtriebsmoment mit dem Achsdifferenzial für den Antrieb der hinteren Räder des Kraftfahrzeuges trieblich verbunden ist.

10. Antriebsvorrichtung nach einem oder mehreren der vorhergehenden Ansprüche, **dadurch gekennzeichnet, dass** das Planetengetriebe ein Doppelplanetengetriebe (10') ist, dessen radial innenliegende Planetenräder (72) mit dem Sonnenrad (74) und dessen außenliegende Planetenräder (72) mit dem Außenrad (76) kämmen, dass ferner das Außenrad (76) das Antriebselement bildet und dass das Abtriebselement zum hinteren Achsdifferenzial der Planetenradträger (70) ist.

11. Antriebsvorrichtung nach einem oder mehreren der vorhergehenden Ansprüche, **dadurch gekennzeichnet, dass** mehrere einander unmittelbar benachbarte und umfangsversetzte Übersetzungsstufen (28, 38) mit jeweils einer Vorgelegewelle (86) um die mit diesen kämmenden Zahnrädern (78, 82) herum vorgesehen sind.

12. Antriebsvorrichtung nach Anspruch 11, **dadurch gekennzeichnet, dass** die mehreren Übersetzungsstufen (28, 38) mit Vorgelegewellen (86) baulich zwischen der Lamellenkupplung (46) und dem Planetengetriebe (10') ähnlich Planetenradanordnungen mit geringem Außenumfang ausgeführt sind.

13. Antriebsvorrichtung nach einem oder mehreren der vorhergehenden Ansprüche, **dadurch gekennzeichnet, dass** die schlupfgesteuerte Lamellenkupplung (46) abhängig von Betriebsparametern und/oder Fahrdynamikparametern so gesteuert ist, dass das Abtriebsmoment des Zwischenachsdifferenziales (10; 10') stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

14. Antriebsvorrichtung nach einem oder mehreren der vorhergehenden Ansprüche, **dadurch gekennzeichnet, dass** die Betriebsparameter mehrere elektronisch abgelegte Fahrprogramme eines automatischen Geschwindigkeits-Wechselgetriebes des Kraftfahrzeuges sind, bei deren Vorwählen unterschiedliche Abtriebsmomentenverteilungen des Zwischenachsdifferenziales (10; 10') durch entsprechende Ansteuerung der Lamellenkupplung (46) vorgegeben sind.

15. Antriebsvorrichtung nach einem oder mehreren der vorhergehenden Ansprüche, **dadurch gekennzeichnet, dass** die Fahrdynamik-Parameter in einem elektronischen Fahrstabilitätsprogramm des Kraftfahrzeuges abgelegt sind und dass neben den bekannten Eingriffen wie Bremseneingriff und Antriebsmomentverringerung der Antriebsmaschine durch entsprechende zusätzliche Ansteuerung der Lamellenkupplung (46) die Abtriebsmomentenverteilung des Zwischenachsdifferenziales (10; 10') in Richtung neutral und ggf. darüber hinaus verändert wird.
